# FASCICULE DE BREVET EUROPEEN

(11) **EP 2 099 699 B1**
(45) Date de publication et mention de la délivrance du brevet: **30.03.2011**
(21) Numéro de dépôt: 08701288.6
(22) Date de dépôt: 08.01.2008
(51) Int. Cl.: B65D 88/66, G21F 5/14, B65D 88/56

(54) **DISPOSITIF ET PROCEDE DE VIDAGE DE JARRES**
VORRICHTUNG UND VERFAHREN ZUM LEEREN VON GLÄSERN
DEVICE AND METHOD FOR EMPTYING JARS

(30) Priorité: 10.01.2007 FR 0752611
(43) Date de publication de la demande: 16.09.2009
(73) Titulaire: Areva NC, 75009 Paris (FR)
(72) Inventeur: PAGES, Jean-Pierre, F-30210 Sernhac (FR); PERISSE, Jocelyn, F-69009 Lyon (FR); VOUAGNER, Pascal, F-69250 Fleurieu-sur-Saone (FR)
(74) Mandataire: Ilgart, Jean-Christophe
(86) Numéro de dépôt international: PCT/EP2008/050113
(87) Numéro de publication internationale: WO 2008/084032

(56) Documents cités:
- CN-A- 1 757 579
- FR-A1- 2 751 311
- GB-A- 2 329 178
- JP-A- 1 240 483
- US-A- 4 569 623
- US-A1- 2005 269 364

## Description

### DOMAINE TECHNIQUE

Le sujet de cette invention est un dispositif ainsi qu'un procédé de vidage de jarres par retournement, selon les préambules des revendications 1 et 6 respectivement. Un tel dispositif ainsi qu'un tel procédé sont décrits par le document US A 4 569 623.

Cette invention a été conçue pour une chaîne de production de combustibles nucléaires, mais elle pourra aussi trouver emploi dans d'autres applications quand des conditions analogues seront réunies, notamment pour vider des récipients contenant des poudres à écoulement difficile.

Les poudres dont il est question dans l'application d'abord envisagée sont issues de pastilles de combustibles nucléaires qui ont été rebutées puis broyées et doivent resservir à la fabrication de nouvelles pastilles. Cette poudre appelée chamotte possède la particularité de taluter et de coller aux parois des récipients à usage d'entreposage et de transfert appelés jarres.

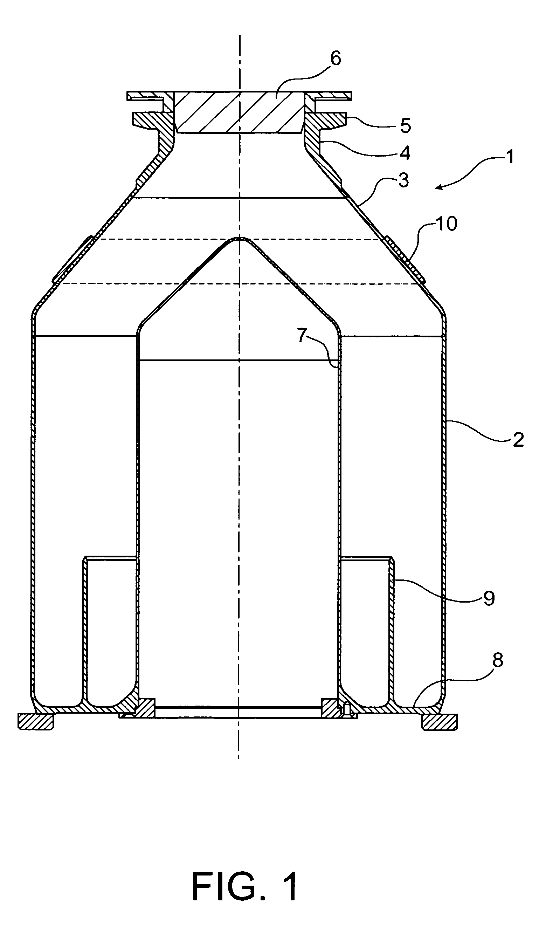

La figure 1 représente une jarre 1 de ce genre. Elle comprend un corps principal 2 cylindrique, un corps supérieur 3 conique et, au sommet, un goulot 4 finissant sur un col 5. La jarre 1 peut être close par un bouchon 6 qui est cependant retiré avant qu'elle n'arrive au dispositif de l'invention. Le centre du corps principal 2 est évidé pour constituer un puits de soufflage 7 (appelé ainsi parce qu'il est le siège d'une ventilation extérieure au stockage de la jarre 1 afin de favoriser son refroidissement) dont la portée s'étend jusque dans le corps supérieur 3 ; et le volume annulaire inclus entre le corps principal 2 et le puits de soufflage 7 porte un radiateur 9 en forme de nervure verticale et circulaire, destiné aussi à l'évacuation de la chaleur produite naturellement par le combustible emplissant la jarre 1. Le puits de soufflage 7 et le radiateur 9 sont tous deux unis au reste de la jarre 1 par le fond 8 du corps principal 2. On remarque enfin un bandage 10 formant une surépaisseur sur une partie de la hauteur du corps supérieur 3.

Quand, le bouchon 6 retiré, la jarre 1 est retournée, c'est sur le bandage 10 qu'on applique des chocs d'après le procédé connu afin de faire couler la poudre hors de la jarre. On utilise un percuteur à électro-aimant. Les résultats ne sont pourtant pas suffisants en raison du caractère collant de la poudre, et c'est pourquoi il est arrivé qu'on cherchât à compléter le vidage de la jarre 1 en appliquant à la main des coups de maillet sur différentes parties de sa surface. Les résultats n'étaient encore pas satisfaisants, même avec des chocs assez forts pour bosseler la jarre 1. Il faut admettre que la conicité forte du corps supérieur 3 et la présence des parois intérieures délimitant le puits d'évacuation de chaleur 7 et formant le radiateur 9 contribuent fortement au collage de la poudre.

On cherche à éliminer cet inconvénient de mauvais vidage avec l'invention ; elle concerne d'abord un dispositif de vidage de jarres par retournement, selon la revendication 1. L'application de vibrations s'est révélée plus efficace que l'application de chocs bien que l'application d'énergie fût plus faible et dût se faire par les endroits où la couronne avait saisi la jarre, à l'extrémité supérieure et près du goulot, loin de ceux, au fond de la jarre, où la poudre séjourne et adhère.

D'après certains détails de réalisation avantageux, les générateurs de vibrations sont situés sur les portions de mise en contact avec le goulot et sont en contact direct avec le goulot ; ils sont situés dans une plaque circulaire d'appui sur une face plane d'extrémité du col de la jarre située à une portion extrême du goulot ; et ils sont répartis sur une circonférence de la plaque circulaire occupant au moins une moitié de la circonférence.

Un autre aspect de l'invention est un procédé de vidage de jarres , par retournement, selon la revendication 6.

Une raison de l'efficacité meilleure de l'invention tient probablement à la possibilité d'exciter sur une plage large de fréquences de vibrations, éventuellement par un balayage de fréquences, de façon à éveiller un plus grand nombre de modes propres.

L'invention sera maintenant décrite en liaison aux figures suivantes :
- la figure 1, déjà décrite, représente une jarre et son bouchon,
- la figure 2 illustre le mandrin d'accostage de la jarre en coupe diamétrale,
- la figure 3 illustre la couronne en vue partielle en direction de l'axe,
- la figure 4 illustre en partie le dispositif de retournement et de vidage,
- et la figure 5 représente la disposition des générateurs de vibrations.

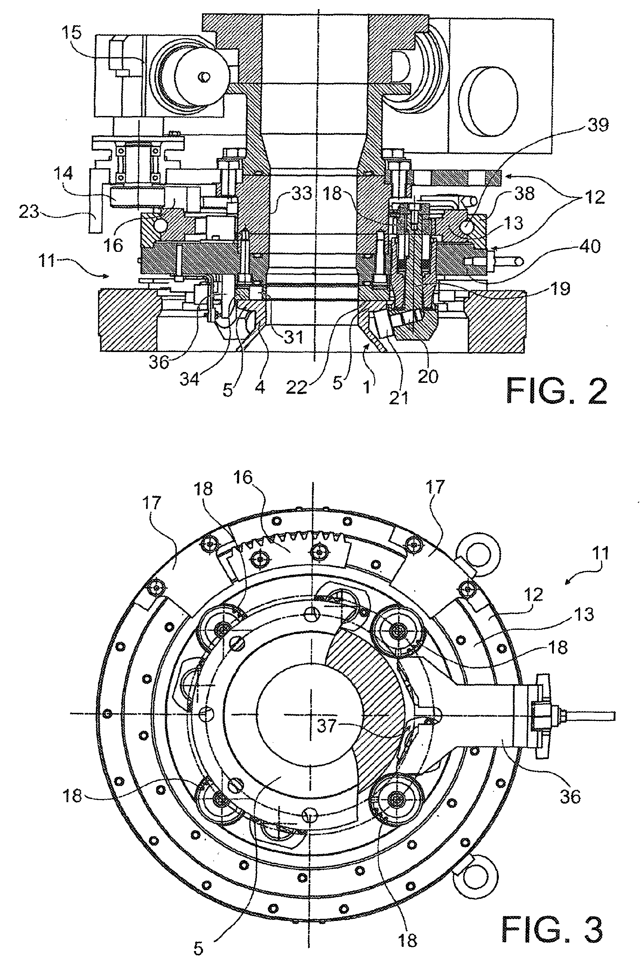

L'appareil utilisé pour accoster, tenir et retourner les jarres 1 est représenté surtout aux figures 2 et 3. Il s'agit d'un mandrin 11 en forme générale de couronne. Le mandrin 11 comprend une partie fixe 12 et une partie mobile 13 circulaires, coaxiales. La partie mobile 13 est tournée par rapport à la partie fixe 12 par un pignon 14 entraîné lui-même par un moteur 15 fixé au sommet de la partie fixe 12. Le pignon 14 engrène pour cela avec un secteur denté 16 vissé sur la partie mobile 13. La course angulaire de la partie mobile 13 est limitée par deux butées 17 sur lesquelles le secteur denté 16 bute et qui sont montées sur la partie fixe 12. La partie mobile 13 est une couronne interne de roulement dentée à sa face interne et qui engrène avec quatre pignons 18 répartis sur un carré dans la couronne. La partie fixe 12 comprend une couronne externe de roulement 38, associée à la partie mobile 13 par une couche de billes 39. Les couronnes de roulement sont établies sur une portion principale 40 de la partie fixe 12. Les pignons 18, tournés par la partie mobile 13 à l'actionnement du moteur 15, font eux-mêmes tourner autant d'axes 19 montés dans la partie fixe 12 et qui leur sont coaxiaux, et qui portent des doigts 20 de verrouillage s'étendant radialement avec une inclinaison par rapport aux axes 19. Les doigts 20 peuvent passer sous le col 5 de la jarre 1 quand elle est placée sous le mandrin 11, et des galets 21 qui sont installés à leur extrémité libre roulent à la surface inférieure du col 5 et le pressent contre une face d'accostage 22 au fond de la couronne. Un mouvement inverse du mécanisme écarte les doigts 20 les uns des autres et permet de retirer la jarre 1.

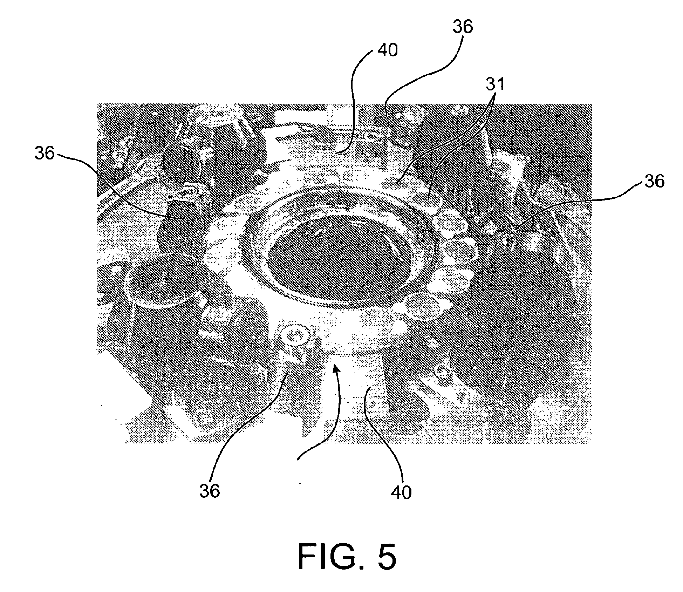

De plus, il existe quatre mors de centrage 36 opposés deux à deux (visibles à la figure 5) entre les doigts 20 et pouvant être commandés d'un mouvement radial dans le mandrin 11 pour se rapprocher l'un de l'autre et enserrer le col 5 de la jarre 1 en exerçant un centrage. Ils sont pour cela munis d'une empreinte en vé 37 dans laquelle une partie de la périphérie du col 5 repose.

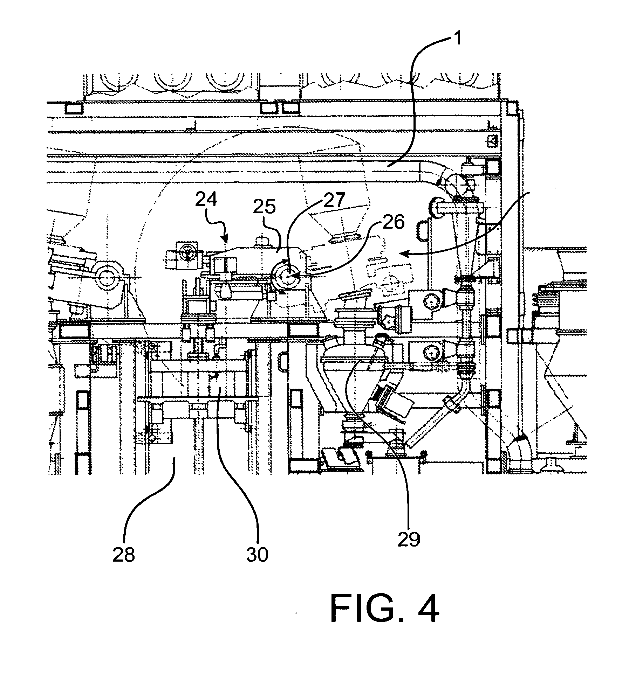

Le mandrin 11 est monté sur une machine de retournement 24 représentée à la figure 4, par des reliefs de prise 23 qui n'ont pas été représentés complètement. La machine de retournement 24 comprend essentiellement un bâti 25, un moteur 26 et un axe horizontal 27 tournant dans le bâti 25 sous l'effet du moteur 26.

L'axe horizontal 27 oscille entre une position où le mandrin 11 surplombe un puits 28 d'arrivée des jarres 1 et se trouve dans la position représentée à la figure 2, avec la face d'accostage 22 au dessous et une position où le mandrin 11 a basculé de près d'un demi-tour, la jarre 1 se trouve sur elle et son contenu peut alors s'écouler dans une trémie 29 à laquelle le mandrin 11 s'est accolé, en traversant un évidement 33 ménagé à travers le mandrin 11 et sur lequel est abouché le goulot 4. Toutefois, l'écoulement n'est pas facile à accomplir, comme on l'a déjà mentionné.

Par souci d'être complet, on signale que le fond (non représenté) du puits 28 est occupé par un convoyeur de transport des jarres 1, et qu'un élévateur 30 peut convoyer les jarres 1 et les soulever dans le puits 28 vers la machine de retournement 24.

Conformément à l'invention, le mandrin 11 est porteur de générateurs de vibrations 31, ici au nombre de seize et répartis dans une plaque excitatrice 34 en occupant au moins sa moitié de son étendue d'après les figures 2 et 5. Ce sont des générateurs de vibrations piézoélectriques qui ont l'avantage d'avoir un encombrement faible et de pouvoir ainsi être placés sans difficulté sur un mandrin 11 de petites dimensions. La face d'accostage 22 est le fond de la plaque 34, qui repose sur le col 5 de la jarre 1 saisie en établissant ainsi l'étanchéité. Les vibrations sont donc communiquées à des générateurs de vibrations 31 au col 5 de la jarre 1 par un contact direct, les générateurs de vibrations 31 affleurant à la face d'accostage 22. Il est avantageux qu'elles aient une intensité suffisante, ce qui explique l'emploi d'un nombre important des générateurs de vibrations 31. Ils sont mis en service alternativement par groupes (par exemple deux groupes de huit dans une réalisation particulière). Ces moyens de commande, au nombre de deux aussi, sont assujettis à la partie fixe 12 et portent la référence 40.

L'expérience et l'analyse modale des jarres 1 ont montré que le col 5 était l'endroit d'application des vibrations où la jarre 1 vibrait le mieux, alors que les vibrations et les chocs infligés ailleurs, et notamment sur le bandage 10, avaient un effet bien inférieur. De plus, les générateurs de vibrations 31 permettent d'effectuer des balayages en fréquence qui viennent à exciter les parois de la jarre 1 selon des modes propres bien différents et qui permettent donc beaucoup mieux de décoller partout la poudre en faisant de chaque parcelle la jarre 1 tour à tour un ventre des vibrations. On cherche à exciter aux modes de résonance donnant un fort coefficient d'amplification entre la zone sollicitée où les générateurs de vibrations 31 sont placés, ici le col 5, et les endroits où se colle la poudre, ici près du fond de la jarre 1. On a trouvé, pour un cas particulier d'un modèle de jarres nommé J60, que de balayer autour de 326 Hertz et de 726 Hertz pendant plusieurs minutes, puis de recommencer dans l'autre sens, donnait de très bons résultats ; ces fréquences correspondent aux deux premiers modes propres de vibrations longitudinales des jarres 1 si bien que les vibrations se répandent sur toute leur hauteur et atteignent toutes les portions où la poudre adhère.

## Revendications

1. Dispositif de vidage de jarres contenant des poudres à l'écoulement difficile, par retournement, comprenant un mandrin (11) monté sur une machine de retournement (24) laquelle comprend essentiellement un bâti (25), un moteur (26) et un axe horizontal (27) tournant dans le bâti (25) sous l'effet du moteur (26), le mandrin (11) venant entourer un goulot (4) de la jarre (1) et comprenant des portions de mise en contact du goulot (4) de la jarre (1), **caractérisé en ce que** le mandrin comprend des générateurs de vibrations (31).

2. Dispositif de vidage de jarres selon la revendication 1, **caractérisé en ce que** les générateurs de vibrations sont situés sur les portions de mise en contact du goulot et sont en contact direct avec le goulot.

3. Dispositif de vidage de jarres selon la revendication 2, **caractérisé en ce que** les générateurs de vibrations (31) sont situés dans une plaque circulaire (34) d'appui sur une face plane d'extrémité d'un col (5) de la jarre (1) à une portion extrême du goulot (4).

4. Dispositif de vidage de jarres selon la revendication 3, **caractérisé en ce que** les générateurs de vibrations (31) sont répartis sur une circonférence de la plaque circulaire (34) en occupant au moins une moitié de la circonférence.

5. Dispositif de vidage de jarres selon l'une quelconque des revendications précédentes, **caractérisé en ce que** les générateurs de vibrations sont piézoélectriques.

6. Procédé de vidage de jarres, par retournement selon la revendication 1, comprenant une étape de saisie d'un goulot de la jarre par un mandrin d'accostage, une étape de retournement de la jarre en faisant basculer le mandrin, et une étape de mise en vibration de la jarre, **caractérisé en ce que** la mise en vibration de la jarre est assurée par le mandrin.

7. Procédé de vidage de jarres selon la revendication 6, **caractérisé en ce que** la mise en vibration de la jarre est effectuée par un balayage d'au moins une plage de fréquences de vibrations.

8. Procédé de vidage de jarres selon la revendication 7, **caractérisé en ce qu'**il comprend deux plages de fréquences de vibrations s'étendant autour de 326 Hz et 726 Hz.

9. Procédé de vidage de jarres selon la revendication 7 ou 8, **caractérisé en ce que** chaque plage de fréquences de vibrations est placée autour d'un mode propre de vibration longitudinale de la jarre (1).

10. Procédé de vidage de jarres selon l'une quelconque des revendications 6 à 9, **caractérisé en ce que** la jarre est mise en vibration par un goulot (4).

11. Procédé de vidage de jarres selon l'une quelconque des revendications 6 à 10, **caractérisé en ce que** les vibrations sont d'origine piézoélectrique.

## Claims

1. Device for emptying jars containing powders with poor flow characteristics by turning over, comprising a mandrel (11) that is mounted on a turning machine (24), which essentially comprises a frame (25), a motor (26) and an horizontal axle (27) turning in the frame (25) in being driven by the motor (26), the mandrel (11) surrounding a neck (4) of the jar (1) and comprising contacting portions of the neck (4) of the jar (1), **characterised in that** the mandrel comprises vibration generators (31).

2. Device for emptying jars according to claim 1, **characterised in that** the vibration generators are situated on the contacting portions of the neck and are in direct contact with the neck.

3. Device for emptying jars according to claim 2, **characterised in that** the vibration generators (31) are situated in a round plate (34) pressing on a flat end face of a collar (5) of the jar (1) at an extreme portion of the neck (4).

4. Device for emptying jars according to claim 3, **characterised in that** the vibration generators (31) are spread out over a circumference of the circular plate (34) occupying at least one half of the circumference.

5. Device for emptying jars according to any one of the previous claims, **characterised in that** the vibration generators are piezoelectric.

6. Method for emptying jars by turning over according to claim 1, comprising a step of grasping a neck of the jar by a mating mandrel, a step of turning upside down the jar by tilting over the mandrel, and a step of vibrating the jar, **characterised in that** the vibration of the jar is assured by the mandrel.

7. Method for emptying jars according to claim 6, **characterised in that** the vibration of the jar is carried out by a scanning of at least one vibration frequency range.

8. Method for emptying jars according to claim 7, **characterised in that** it comprises two vibration frequency ranges extending around 326 Hz and 726 Hz.

9. Method for emptying jars according to claim 7 or 8, **characterised in that** each vibration frequency range is placed around a fundamental mode of longitudinal vibration of the jar (1).

10. Method for emptying jars according to any one of claims 6 to 9, **characterised in that** the jar is vibrated at the neck (4).

11. Method for emptying jars according to any one of claims 6 to 10, **characterised in that** the vibrations are of piezoelectric origin.

## Patentansprüche

1. Vorrichtung zur Entleerung von Gefäßen, die schwer ausströmende Pulver enthalten, durch Umkehren, umfassend ein Futter (11), das an eine Umkehrmaschine (24) montiert ist, die im Wesentlichen einen Rahmen (25), einen Motor (26) und eine horizontale Achse (27) umfasst, die sich unter der Wirkung des Motors (26) im Rahmen (25) dreht, wobei das Futter (11) um einen Hals (4) des Gefäßes (1) gelegt wird und Kontaktabschnitte mit dem Hals (4) des Gefäßes (1) aufweist, **dadurch gekennzeichnet, dass** das Futter Vibrationserzeuger (31) umfasst.

2. Vorrichtung zur Entleerung von Gefäßen nach Anspruch 1, **dadurch gekennzeichnet, dass** die Vibrationserzeuger auf den Kontaktabschnitten des Halses liegen und in direktem Kontakt mit dem Hals sind.

3. Vorrichtung zur Entleerung von Gefäßen nach Anspruch 2, **dadurch gekennzeichnet, dass** die Vibrationserzeuger (31) an einem Endabschnitt des Halses (4) in einer kreisförmigen Auflageplatte (34) auf einer planen Endfläche eines Kragens (5) des Gefäßes (1) liegen.

4. Vorrichtung zur Entleerung von Gefäßen nach Anspruch 3, **dadurch gekennzeichnet, dass** die Vibrationserzeuger (31) auf einem Umfang der kreisförmigen Platte (34) verteilt sind, wobei sie mindestens eine Hälfte des Umfangs einnehmen.

5. Vorrichtung zur Entleerung von Gefäßen nach einem der vorherigen Ansprüche, **dadurch gekennzeichnet, dass** die Vibrationserzeuger (31) piezoelektrisch sind.

6. Verfahren zur Entleerung von Gefäßen durch Umkehren nach Anspruch 1, umfassend einen Schritt des Greifens eines Halses des Gefäßes durch ein Anlegefutter, einen Schritt des Umkehrens des Behälters durch Kippen des Behälters, und einen Schritt des in Vibration Versetzens des Gefäßes, **dadurch gekennzeichnet, dass** das in Vibration Versetzen des Gefäßes durch das Futter gewährleistet wird.

7. Verfahren zur Entleerung von Gefäßen nach Anspruch 6, **dadurch gekennzeichnet, dass** das in Vibration Versetzen des Gefäßes durchgeführt wird, indem mindestens ein Vibrationsfrequenzbereich durchlaufen wird.

8. Verfahren zur Entleerung von Gefäßen nach Anspruch 7, **dadurch gekennzeichnet, dass** es zwei Vibrationsfrequenzbereiche umfasst, die sich um 326 Hz und 726 Hz herum ausbreiten.

9. Verfahren zur Entleerung von Gefäßen nach Anspruch 7 oder 8, **dadurch gekennzeichnet, dass** jeder Vibrationsfrequenzbereich um eine Eigenlängsvibrationsform des Gefäßes (1) herum liegt.

10. Verfahren zur Entleerung von Gefäßen nach einem der Ansprüche 6 bis 9, **dadurch gekennzeichnet, dass** das Gefäß durch einen Hals (4) in Vibration versetzt wird.

11. Verfahren zur Entleerung von Gefäßen nach einem der Ansprüche 6 bis 10, **dadurch gekennzeichnet, dass** die Vibrationen piezoelektrischen Ursprungs sind.
